Europäisches Patentamt

European Patent Office

Office européen des brevets

(11) Publication number: **0 084 979**
**B1**

(12) **EUROPEAN PATENT SPECIFICATION**

(45) Date of publication of patent specification: **07.06.89**

(21) Application number: **83300390.8**

(22) Date of filing: **26.01.83**

(51) Int. Cl.⁴: **B 60 B 11/02**

(54) **Wheel coupling apparatus.**

(30) Priority: **26.01.82 GB 8202152**

(43) Date of publication of application:
**03.08.83 Bulletin 83/31**

(45) Publication of the grant of the patent:
**07.06.89 Bulletin 89/23**

(84) Designated Contracting States:
**BE DE FR GB NL SE**

(56) References cited:
**FR-A-2 329 459
GB-A-2 031 351
US-A-3 337 270
US-A-3 583 767
US-A-3 836 202**

(73) Proprietor: **RICHARD STOCKS LIMITED
Kirkgate Street
Walsoken Nr Wisbech Cambs (GB)**

(72) Inventor: **Stocks, Richard Alexander
Kirkgate Street
Walsoken Wisbech Cambs (GB)**

(74) Representative: **Archer, Philip Bruce et al
Urquhart-Dykes & Lord Trinity Court Trinity
Street Priestgate
Peterborough Cambridgeshire PE1 1DA (GB)**

Courier Press, Leamington Spa, England.

## Description

This invention relates to wheel coupling apparatus suitable to couple together ground-engageable primary and supplementary vehicle wheels. An example of the use of such apparatus is to attach so-called dual wheels to the driven wheels of an agricultural tractor. However, the invention is also applicable to many other situations where primary and supplementary wheels are to be coupled side by side, including combine harvesters and all self-propelled agricultural machines, industrial and construction machinery, non-driven wheels of such implements as seed drills, and any self-propelled vehicle for which increased traction and/or reduced soil compaction is required, and any non-self-propelled vehicle in which reduced soil compaction is required. Moreover, it is to be understood that the present invention is applicable not only to conventional pneumatic type wheels but also to cage wheels and any other type of wheel.

In the case of wheel coupling apparatus for attaching dual wheels to the driven wheels of agricultural tractors many proposals have been made and various types of coupling apparatus are currently in use. However, practical experience has shown that there are several significant technical problems to be overcome by such wheel coupling apparatus and none of the apparatus proposed or available hitherto appears to have provided an adequate response to these problems.

Firstly, there is the question of operator convenience. It must be understood that in the case of dual wheels for an agricultural tractor the size and weight of the supplementary wheel and tyre assembly on its own is such that an average tractor driver usually has insufficient strength to manipulate the wheel during the process of attaching the supplementary wheel to the primary tractor wheel. The driver is able to carefully roll the supplementary wheel up to the primary wheel and to hold it approximately in the correct position for the coupling operation. However, it is out of the question for him to effect any significant manoeuvring of the supplementary wheel relative to the primary wheel, without assistance. Thus, wheel coupling apparatus which requires the exact alignment of drive lugs on the primary and supplementary wheels or their associated spacer bands or spacer means is extremely inconvenient from the user's point of view and a single unaided tractor driver usually cannot properly mount a supplementary wheel on to a primary wheel without assistance.

The above-identified wheel-alignment problem has to some extent been recognised, and proposals have been made for wheel coupling apparatus in which alignment of drive lugs is not required and the wheels are coupled together by means of tensionable link means acting between the primary wheel and a rail member on the supplementary wheel. Connector members provided on the link means engage the rail member and are arranged to grip the rail by a jamming action under the twisting action of the torque applied to the wheel assembly, the connector members and link means thus serving to transmit torque between the primary and supplementary wheels.

The limitations of these last-mentioned proposals relate principally to the strength of the rail assembly and to further aspects of the question of ease of assembly.

As regards strength of the rail assembly, previous proposals for such rails have included a T-section rail and an O-section rail and neither of these proposals offers adequate strength in use in view of the leverage effect of the tension forces exerted on the rail by the link means during use. These prior proposals have been found to be satisfactory under United States farming conditions in which, generally speaking, farm implements are of the trailed variety. However, under prevailing UK farm practice conditions in which many implements including even very wide and heavy cultivators are fully mounted on the tractor 3-point hitch, the loads applied to the tractor rear wheel assemblies are much higher than in US farming operations and it has been found that these prior proposals have inadequate strength for UK farming conditions.

As regards operator convenience, the prior rail proposals have required the use of connector members at the ends of the link means, the connector members being shaped and proportioned to fit round the profile of the rail member so as not to become disengaged therefrom during operation. As a result, it has been necessary to engage the connector members with the rail member by inserting the connector members into a gap in the rail member and then sliding the connector members in the circumferential direction to the desired position around the circumference of the wheel so that the link means can be connected up at its other end to a suitable attachment on the primary wheel.

It will now be appreciated just how difficult this latter operation can become for an unassisted tractor driver when the weight of the supplementary wheel is such that he can only just stop it toppling over.

A further factor concerning operator convenience relates to the tensioning mechanism for the link means. Some of the prior proposals have required the use of screw-threaded tensioning mechanisms. While such mechanisms are simple and inexpensive, it will be appreciated that they raise certain difficulties during the wheel-attachment process as outlined above.

In US 3,836,202 (Bonomo) there is disclosed in Fig. 5 a wheel coupling assembly as defined in the pre-characterising portion of claim 1 hereof in which a connector member is, at its outer end, hooked round a flat rail member, and is held against the outer side of the rail member by a link tensioned by a screw threaded adjustor. At the inner side of the connector member there is provided a set screw which can be adjusted to engage under the rail to retain the connector member in its working position after disengagement of the wheel coupling assembly.

The mounting for the set screw at the inner side of the connector member is in the form of a flange suitably tapped to receive the set screw. The axis of the tapped hole is such that the set screw extends at an inclination to the rail member so as to pass under the latter's inner edge for engagement both with the rail member and the wheel rim. As a result, there is a relatively large clearance zone between the inner edge of the rail member and the flange which mounts the set screw. This clearance is maintained at all times by the tension in the link members and by the set screw itself. A domed nut pivot arrangement ensures that the connector is maintained in perfectly parallel single-sided engagement with the rail at all times. Hence the engagement of the connector members of Bonomo with their rail member for load or torque transmission purposes is partly by virtue of the set screws and partly by virtue of axial tension loads in the links and corresponding friction between contacting parts of the wheels. In this latter respect, the Bonomo connector members are thus similar to those disclosed in, for example, U.S. 3,337,270 (Peterson). In both these prior art arrangements, the problems of adequate torque transmission, as discussed above, remain outstanding.

An object of the present invention is to provide wheel coupling apparatus providing improvements in relation to one or more of the technical problems identified above.

According to the invention there is provided wheel coupling apparatus and a method of coupling wheels as defined in the accompanying claims.

In an embodiment described below there is provided wheel coupling apparatus in which the connector member has axially spaced abutments as structures which, when the connector member is received on the rail member, are engageable with opposite axial sides of the rail member, and the rail member comprises a cylindrical or part-cylindrical radially outwardly facing side surface having a flat profile in radial section, and said surface being secured in face to face contact with the supplementary wheel. In this way there is provided the combination of the ability to transmit torque between the wheels (by virtue of the spaced abutments engageable with opposite sides of the rail member), and a relatively strong rail member assembly arising from the face to face contact of the rail member and the supplementary wheel rim. Moreover, where the rail member is simply a generally cylindrical collar (or a portion of such a collar) the line of action of the link means which applies load to the rail member is substantially in-line with the rail member so that the rail assembly is stronger than in the prior T-rail and O-rail.

Also disclosed in an embodiment described below is wheel coupling apparatus in which the connector member is formed so as to be insertable generally radially over the rail member to connect thereto at a chosen location along the length of the rail member, the connector member also having the said axially spaced abutments or structures which, when the connector member is received on the rail member, are engageable with opposite axial sides of the rail member. In this way there is provided the combination of the ability to transmit drive torque between the primary and supplementary wheels (by virtue of the abutments on the connector members, as discussed above) with the facility to snap-on the connector members at the desired location on the rail member so that the difficult task of inserting the connector members through a gap in the rail member and then edging them round in the circumferential direction of the wheel is avoided.

This facility to snap-on the connector members arises from the form of the connector members as disclosed herein and in the embodiments described below this facility is combined with a lever-operated mechanism for tensioning the link means which serves further to simplify the attachment process.

An embodiment of the invention will now be described by way of example with reference to the accompanying drawings in which:

Fig. 1 shows a radial section through wheel coupling apparatus according to the invention in the coupled condition thereof; and

Fig. 2 shows, in a view similar to that of Fig. 1, a step in the process of coupling a supplementary wheel to a primary wheel.

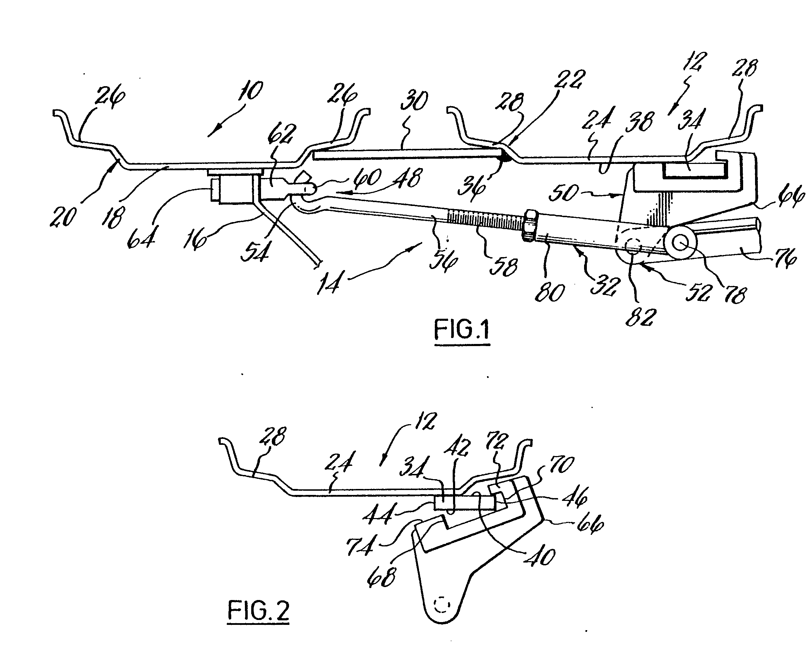

As shown in Fig. 1 a primary wheel 10 and a secondary wheel 12 are coupled together in side by side relationship by means of wheel coupling apparatus 14.

Primary wheel 10 is, for example, one of the rear ground-engageable driving wheels of an agricultural tractor, and has a central wheel disc 16 secured to the base of the tyre well 18 of the wheel rim 20 of primary wheel 10, in the usual way. It is to be understood that the present invention is applicable to substantially all types of ground wheels having pneumatic tyres, and to a considerable variety of non-pneumatic wheels, and the details of the structure of the wheels to be coupled are of significance only in relation to their effect on the manner in which wheel coupling apparatus 14 is secured thereto.

Secondary wheel 12 is, for example, a supplementary or "dual" wheel to be attached to the primary rear drive wheel 10 of a tractor to improve the traction and floatation thereof. Secondary wheel 12 comprises a wheel rim 22 having a tyre well 24 similar to that of primary wheel 10, and both wheel rims have the conventional profile with bead seats 26, 28 to receive the beads of pneumatic tyres. It will be appreciated that it is by no means essential for the purpose of the present invention for wheels 10 and 20 to be identical in structure. As shown in Fig. 1, secondary wheel 12 is of course not provided with a central wheel disc corresponding to disc 16 of primary wheel 10 since the secondary wheel is supported on the primary wheel in the manner to be described. Thus, the term "wheel" as used in this specification and claims is to be interpreted accordingly as covering a wheel without a central wheel disc or similar supporting structure and, in view of the fact that such wheels may well be sold without the provision of a pneumatic tyre, the term "wheel" is likewise to be construed as covering just the wheel rim or analogous structure in the case of a non-pneumatic wheel.

Wheel coupling apparatus 14 comprises spacer means 30, link means 32 and a rail member 34.

Spacer means 30 is in the form of a steel spacer band, tubular in form and which is a taper fit into the tapered bead seats 26, 28 of wheels 10, 12. Preferably spacer band 30 is welded at 36 to rim 22 of secondary wheel 12 so as to simplify the operation of assembling the two wheel rims and the spacer band in the desired relationship.

It is to be understood that spacer band 30 may be modified considerably according to the demands of the particular wheel assembly. For example, the spacer band may be formed with apertures so as to have a relatively open or cage-like structure. Likewise, a discontinuous or frame-like structure may be substituted for the spacer band in the form of circumferentially spaced apart rods or spacer elements welded or otherwise secured between the wheels. It will be appreciated that since, in the present embodiment, the major part of the torque transmitted to wheels 10, 12 is not transmitted through the spacer band, considerable variation in the structure of the latter is possible and indeed, in some situations, it may be possible to omit the spacer means and simply employ the coupling apparatus 14 to secure the two wheels together in abutting relationship.

Rail member 34 is in the form of a length of steel strip material having a flat profile in cross section, as shown in Fig. 1, and formed into a cylindrical tube or collar of diameter such as to conform to the diameter of the radially inwardly facing surface 38 of tyre well 24 of secondary wheel 12.

Thus, rail member 34 has cylindrical side surfaces 40 and 42 facing radially outwardly and radially inwardly respectively, and edge surfaces 44, 46 facing axially of the wheel assembly 10, 12.

Rail member 34 is continuously welded to tyre well 24 of secondary wheel 12 all round the internal periphery thereof, but with a short gap to provide access to the inflation valve for the pneumatic tyre (not shown). Thus the rail member is secured, by welding, in face to face contact with the tyre well of wheel rim 22, and this makes for a particularly strong and robust rail assembly. Moreover, particular attention is drawn to the feature that the rail member 34 is secured to wheel rim 22 so that the rail member projects axially beyond the edge of the surface 38 of wheel rim 22 to which it is secured, for a purpose to be more fully described below.

Rail member 34 may be secured to the wheel assembly by any suitable means, for example by riveting. Where welding is employed, although conventional stick welding employing carbon dioxide or argon gas shielding may be employed, these latter techniques tend to cause an alteration in the metal structure of the wheel rim and/or the rail in the region of the weld due to the temperature gradients involved. Such alteration of the metal structure and crystallisation is detrimental to the structural strength of the assembly and it is therefore preferred to employ argon or carbon dioxide-shielded cored wire welding in which a fine bore tube of mild steel is employed in place of the conventional solid anode or "stick", so as to reduce the temperature gradients. Alternatively, submerged arc welding techniques may be employed to advantage, wherein the anode is submerged during the welding operation in the molten metal of the joint.

It will be appreciated that the above-disclosed arrangement of rail member 34 with its side surface 40 in face to face contact with the inner surface 38 of tyre well 24 enables a far stronger welded joint to be formed than if the rail had been welded with an edge surface 44 or 46 in engagement with the wheel rim.

Link means 32 will now be described in more detail. At least two such link means are provided. Preferably three or more link means are provided for all but the smaller wheels. For a 10 × 24 size wheel rim two link means are sufficient. The number of link means increases with the size of the supplementary wheel. Thus, three link means are recommended for a 14 × 13 supplementary wheel, four link means for a 14 × 34 wheel, and six for an 18 × 38 supplementary wheel.

As shown in Fig. 1, each link means is secured at its inner end 38 to primary wheel 10 and is connected at its outer end 50 to rail member 34, and the ends 48, 50 of the link means are connected by a lever-operated tensioning mechanism 52.

The inner end 48 of link means 32 is formed with a hook member 54 at the end of a rod or shank 56 formed with screw threads 58 whereby the effective length of the link means can be adjusted. Hook member 54 is insertable into an eye 60 of an eye nut 62 provided on wheel disc 16 of primary wheel 10. An eye nut 62 is provided for each of the link means 32.

Many alternatives to the hook and eye nut arrangement can be devised which are also applicable for the purpose of the present invention. However, the eye nuts represent a simple method of providing a connection for the link means employing structure (bolts 64) already provided on the tractor wheel.

Outer end 50 of link means 32 is provided by a connector member 66 which serves to connect the link means to rail member 34 and which has a structure and function of particular significance in relation to the present invention.

Connector member 66 is in the form of a drop-forged structure of generally G-shaped form including a lower channel-section portion providing spaced abutments 68, 70 for engagement with the edge surfaces 44, 46 of rail member 34.

Connector member is of width (measured in the circumferential direction of the wheel assembly) approximately 3 centimeters and abutments 68, 70 provide flat surfaces for engagement with the flat side edges of the rail member.

The connector member further comprises a retaining member 72 or hook member which, in use, is lodged round the outer edge of rail member 34 so as to resist disengagement of the connector member from the rail member.

As shown in Fig. 2, connector member 66 is insertable over rail member 34 to connect thereto at a chosen location along the length of the rail member, by insertion of retaining member 72 into the gap between rail member 34 and bead seat 28 of secondary wheel 12 followed by clockwise angular movement of the connector member into the assembled attitude shown in Fig. 1. In this latter attitude, a further abutment or foot 74 on connector member 66 engages wheel rim 22 adjacent the inner edge surface 44 of rail member 34 and applies load thereto. Abutment 74 is formed with a flat abutment surface for face to face engagement with the inner surface of wheel rim 22.

Tensioning mechanism 52 comprises a hand lever 76 connected by a pivot 78 to connector member 66, and a pivoted link 80 connected by a pivot 82 to hand lever 76 and formed with a female screw thread to receive the threaded end of rod 56.

As shown in Fig. 1, mechanism 52 has, in its tensioned position, an over-centre configuration in which hand lever 76 is retained in the position shown. However, it would be possible to provide a non over-centre or toggle-action arrangement, but in such a case it would be desirable to provide specific retaining means to hold the lever mechanism in its tensioned condition.

In use, the wheel coupling apparatus is employed as follows.

Secondary wheel 12 is rolled into position alongside primary wheel 10 with spacer band 30 roughly nested into bead seat 26. Then, the requisite number of link means are connected between eye nuts 62 and rail member 34. Each link means 32 is first connected to its eye nut 62 and then, with the lever mechanism 52 in its untensioned position (hand lever 76 rotated clockwise from the position shown in Fig. 1) the connector member 66 is inserted over rail member 34 in the manner shown in Fig. 2, the connector member is brought to the position shown in Fig. 1 and hand lever 76 is moved to the tensioned position shown in Fig. 1. This operation is performed for each of the requisite number of link means and the assembly operation is complete. If, in the case of any given link means, the tension is insufficient after moving hand lever 76 to the Fig. 1 position, then adjustment of the effective length of the link means is made by means of the screw threaded portion 58 on rod 56.

The principal advantages of the above-described embodiment will now be readily apparent. The structure of the wheel coupling apparatus is simple and rugged permitting a sensible cost of construction in association with a more than adequate strength in operation. Moreover, as will be appreciated from the above description, the assembly operation is remarkably simple and requires no complex manoeuvring of the supplementary wheel relative to the primary wheel nor of the link means relative to the rail member. A considerable measure of the strength of the assembly arises from the structure and arrangement of rail member 34 whereby the line of action or pull of the link means 32 is very close to the joint between the rail member and the wheel, thereby avoiding the lever effect of previous rail arrangements in which the rail tends to be torn off. Moreover, this strong rail arrangement is combined with a connector member structure which not only permits the connector members to be "snapped-on" where desired along the length of the rail member but also enables the connector members to abut the opposite sides of the rail member by a slight twisting action under the torque generated during use of the assembly, thereby transmitting the torque from the primary wheel through the link means to the secondary wheel through the rail member — thus avoiding the need for alignable lugs in the wheels or spacer band, and the assembly difficulties consequential thereon. Moreover, the provision of foot 74 on connector members 66 giving direct application of load to the wheel rim 22 further strengthens the assembly by further reducing the loads which are applied directly to the rail member.

Among modifications which are envisaged in relation to the above embodiment but have not been specifically illustrated are the following:

1. The use of rail members of other cross sectional shapes in association with a connector member which is nevertheless insertable over the rail at any selected position along the rail so as to preserve the ease of assembly of the above described embodiment. This feature of ability to insert the connector member over the rail member derives in large part from the structure of foot 74 which engages but does not go under the rail, thereby engaging the wheel rim wholly inwardly of the rail. Moreover, it would be possible to provide a rail member generally similar in form to rail member 34 but with a non-flat profile, for example with a curved profile to correspond to the profile of the relevant portion of the wheel rim. Also, the rail member need not extend all the way round the circumference of the secondary wheel and could very well be provided only at discreet portions thereof, being secured thereto by welding, riveting or otherwise. It is also to be noted that the rail member need not be secured to the bead seat as such of the wheel rim but may be secured elsewhere to the wheel rim or wheel. For example, in the case of wheels having a double well, the rail member can with advantage be secured to the base of the inner well and at that position there is the advantage that the rail member requires no interruption to receive the inflater valve for the pneumatic tyre.

2. As regards the connector member, variations in its shape and configuration are possible. For the purpose of jamming against the opposite sides of the rail member in order to transmit drive torque it is necessary to provide abutments for engagement with the opposite sides of the rail, but between these abutments the shape can vary considerably. Retaining means to hook round the rail is desirable where possible, and structure corresponding to foot 74 engaging the wheel rim adjacent the rail at the inner side thereof is likewise an important feature. Otherwise, the connector member can be varied in design considerably to accommodate variations in section of the rail member in those cases where the advantages of the above-described flat section rail member are not required. Thus, for example, where a T-section rail is employed a G-shaped connector member having a foot corresponding to foot 74 and not extending under the inner edge of the rail would operate generally as described above but the rail member itself would be less strong.

3. As regards the tensioning mechanism 52, considerable variation is possible. A non lever mechanism may be employed such as a simple screw mechanism which is tensioned by a spanner or other external tool.

4. Moreover, it will be understood that the wheel coupling apparatus of the invention, being very simple in structure, may well be sold as a kit of parts comprising spacer means, a rail member and a series of eye nuts and link means having connector members. The user can then weld the rail member to his supplementary wheel and likewise affix the spacer means in position thereon. The claims of this application are to be construed as covering such a kit of parts.

5. In the case where a user wishes for some particular reason to use drive lugs and notches as the torque transmission means between the primary and supplementary wheels, such system may be employed while nevertheless employing the improved link means, connector members and rail member of the present invention and such an arrangement is envisaged as falling within the scope of the present invention. Moreover, in certain situations it may be desirable to provide the rail member on the spacer means rather than directly on the supplementary wheel and this modification is likewise envisaged as falling within the claims of this application.

## Claims

1. Wheel coupling apparatus (14) to couple together primary (10) and supplementary (12) wheels in side by side torque transmitting relationship without the use of alignable drive lugs or the like on said primary and supplementary wheels, the apparatus comprising two or more tensionable link means (32) to interconnect the wheels, one (12) of the wheels having secured thereto a circumferentially extending rail member (34) to receive a connector member (66) provided at one end of at least one of said link means (32), the rail member having axially spaced opposite sides (44, 46), and said connector member (66) being formed with axially spaced structures (68, 70) at opposite sides (44, 46) of the rail member which also extend circumferentially of the wheels, the spacing of said structures being fixed and large enough so that said connector (66) is insertable radially over the rail member (34) during assembly so as to be received thereon at any chosen location along the circumferential length thereof where the connector member is required to be positioned during use; characterised in that said link means (32) comprises twist-transmitting structure (76, 78, 80, 82) connected to said connector member (66) which can transmit a twisting action to the connector member (66) about an axis generally radial to the wheel assembly under the torque applied to the wheel assembly in use, and the spacing of said axially spaced structures (68, 70) being small enough so that said twisting action applied to the connector member causes abutting engagement of said axially spaced structures with opposite sides of the rail member for transmitting driving loads of said wheel coupling apparatus during use through said tensioned link means (32).

2. Wheel coupling apparatus according to claim 1 characterised in that said twist transmitting structure (76, 78, 80, 82) comprises a link member (56, 58, 80) extending generally axially of said wheels in use, and at least one pivot joint (78, 82) connecting said link member to said connector member (66), the pivot axis of said pivot joint being generally transverse to the lengthwise extent of the link member.

3. Wheel coupling apparatus according to claim 2 characterised in that two pivot joints (78, 82) are provided connecting said link member (56, 58, 80) to said connector member, the pivot axes of both of said pivot joints being generally transverse to the lengthwise extent of the link member, and said pivot joints forming part of an over-centre action toggle mechanism for tensioning said link means.

4. Wheel coupling apparatus according to claim 3 characterised in that said toggle mechanism is connected to an upstanding portion on said connector member (66).

5. Apparatus according to any one of the preceding claims characterised in that said rail member (34) projects axially from the surface (38) of the wheel (12) to which it is secured, on the side thereof remote from the other wheel (10) and said connector member (66) comprises a hooked portion to lodge around the projecting side of the rail member, and at the other side the connector member (66) comprises a radially outwardly facing abutment or foot (74) which is engageable with said one (12) of said wheels adjacent the respective edge of the rail member.

6. Apparatus according to any one of the preceding claims characterised in that said rail member (34) comprises a length of flat strip material, and said axially spaced structures of the connector member (66) are engageable with the spaced edges (44, 46) of said strip material.

7. Apparatus according to any one of the preceding claims characterised in that said connector member (66) comprises a generally channel-shaped portion to receive said rail member (34) and providing said axially spaced structures (68, 70).

8. Apparatus according to any one of the preceding claims characterised in that said connector member (66) is generally G-shaped.

9. A method of coupling primary (10) and supplementary (12) wheels in side by side relationship, comprising providing wheel coupling apparatus according to any one of the preceding claims, characterised by the step of causing said twist transmitting structure (76, 78, 80, 82) to effect abutting engagement of said axially spaced structures with opposite sides of the rail member so as to transmit driving loads of said wheel coupling apparatus during use through said tensioned link means.

**Patentansprüche**

1. Radkopplungsvorrichtung (14) zum Zusammenkoppeln eines ersten Rades (10) mit einem Hilfsrad (12) Seite an Seite in einer drehmomentübertragenden Beziehung ohne Verwendung von ausrichtbaren Treibmuttern oder dergleichen an dem ersten Rad und dem Hilfsrad, wobei die Vorrichtung zwei oder mehr spannbare Verbindungselemente (32) zum Verbinden der Räder aufweist, wobei an einem (12) der Räder dazu ein sich in Umfangsrichtung erstreckendes Schienenelement (34) aufweist zur Aufnahme eines Amschlußelementes (66), das an einem Ende wenigstens eines der Verbindungselemente (32) angeordnet ist, wobei das Schienenelement axial beabstandete gegenüberliegende Seiten (44, 46) aufweist, wobei das Anschlußelement (66) mit axial beabstandeten Anordnungen (68, 70) an gegenüberliegenden Seiten (44, 46) des Schienenelementes ausgebildet ist, die sich ebenfalls in Umfangsrichtung der Räder erstrecken, wobei der Abstand der Anordnungen fest und groß genug ist, so daß das Anschlußelement (66) radial über das Scheinenelement (34) während des Zusammenbaus einsetzbar ist, so daß es an jeder gewählten Stelle über den Umfang aufgenommen werden kann, an welchem das Anschlußelement während des Gebrauchs angeordnet werden muß, dadurch gekennzeichnet, daß die Verbindungseinrichtung (32) einen torsionsübertragenden Aufbau (76, 78, 80, 82) aufweist, der mit dem Anschlußelement (66) verbunden ist und welcher eine Torsionswirkung auf das Anschlußelement (66) um eine Achse übertragen kann, die im wesentlichen radial zu der Radanordnung verläuft, unter dem Drehmoment, das auf die Radanordnung während des Betriebs aufgebracht wird, und daß der Abstand der axial beabstandeten Anordnungen (68, 70) klein genug ist, so daß die Torsionswirkung, die auf das Anschlußelement aufgebracht wird, eine Anlage der axial beabstandeten Anordnungen an gegenüberliegenden Seiten des Schienenelementes zur Übertragung der Antriebskraft der Radkupplungsvorrichtung während des Betriebs durch die gespannte Verbindungseinrichtung (32) bewirkt.

2. Radkupplungsvorrichtung nach Anspruch 1, dadurch gekennzeichnet, daß die torsionsübertragende Anordnung (76, 78, 80, 82) ein Verbindungselement (56, 58, 80), das sich im Betrieb im wesentlichen axial zu den Rädern erstreckt, und wenigstens eine Gelenkverbindung (78, 82) umfaßt, die das Verbindungselement mit dem Anschlußelement (66) verbindet, und daß die Schwenkachse der Gelenkverbindung im wesentlichen quer zur Längserstreckung des Verbindungselementes verläuft.

3. Radkupplungsvorrichtung nach Anspruch 2, dadurch gekennzeichnet, daß zwei Gelenkverbindungen (78, 82) vorgesehen sind, die das Verbindungselement (56, 58, 80) mit dem Anschlußelement verbinden, daß die Schwenkachsen der beiden Gelenkverbindungen im wesentlichen quer zur Längserstreckung des Verbindungselementes verlaufen und daß die Gelenkverbindungen Teil eines über den Totpunkt betätigbaren Kniehebelmechanismus zum Spannen der Verbindungseinrichtung bildet.

4. Radkupplungsvorrichtung nach Anspruch 3, dadurch gekennzeichnet, daß der Kniehebelmechanismus mit einem abstehenden Abschnitt des Anschlußelementes (66) verbunden ist.

5. Vorrichtung nach einem der vorherigen Ansprüche, dadurch gekennzeichnet, daß das Schienenelement (34) axial von der Fläche (38) des Rades (12), an welcher es befestigt ist, an der Seite entfernt von dem anderen Rad (10) abragt, daß das Anschlußelement (66) einen hakenartigen Bereich zum Anordnen um die abragende Seite des Schienenelementes umfaßt, und daß an der anderen Seite des Anschlußelementes (66) ein radial nach außen gerichteter Anschlag oder Fuß (74) vorgesehen ist, welcher in Anlage bringbar ist mit dem einen (12) der Räder angrenzend an die entsprechende Kante des Schienenelementes.

6. Vorrichtung nach einem der vorherigen Ansprüche, dadurch gekennzeichnet, daß das Schienenelement (34) eine Länge aus flachem Streifenmaterial umfaßt, und daß die axial beanstandeten Anordnungen des Anschlußelementes (66) mit den beabstandeten Kanten (44, 46) des Streifenmaterials in Eingriff bringbar sind.

7. Vorrichtung nach einem der vorherigen Ansprüche, dadurch gekennzeichnet, daß das Anschlußelement (66) einen im wesentlichen kanalförmigen Abschnitt zur Aufnahme des Schienenelementes (34) und zur Ausbildung der axial beabstandeten Anordnungen (68, 70) aufweist.

8. Vorrichtung nach einem der vorherigen Ansprüche, dadurch gekennzeichnet, daß das Anschlußelement (66) im wesentlichen G-förmig ist.

9. Verfahren zur Kopplung eines ersten Rades (10) Seite an Seite mit einem Hilfsrad (12), wobei eine Radkopplungsvorrichtung nach einem der vorherigen Ansprüche vorgesehen wird, gekennzeichnet durch den Schritt, daß die torsionsübertragende Anordnung (76, 78, 80, 82) veranlaßt wird, mit den axial beabstandeten Anordnungen in Anlage mit gegenüberliegenden Seiten des Schienenenelementes zu gelangen, um während des Betriebs Antriebskräfte der Radkopplungsvorrichtung durch die gespannte Verbindungseinrichtung zu übertragen.

**Revendications**

1. Dispositif (14) de jumelage de roues pour accoupler ensemble une roue principale (10) et une roue supplémentaire (12) en relation de transmission de couple côte à côte sans utilisation de doigts d'entraînement alignables ou d'éléments analogues sur lesdites roues principale et supplémentaire, le dispositif comprenant deux organes de liaison (32) ou plus, pouvant être mis en tension pour interconnecter les roues, un rail circonférentiel (34) étant fixé à l'une (12) des roues pour recevoir un connecteur (66) prévu à une extrémité d'au moins un desdits organes de liaison (32), le rail présentant des côtés opposés axialement espacés (44, 46) et ledit connecteur (66) comportant des structures axialement espacées (68, 70), sur les côtés opposés (44, 46) du rail, qui s'étendent également dans la direction circonférentielle des roues, l'espacement desdites structures étant fixe et assez grand pour qu'on puisse insérer ledit connecteur (66) radialement sur le rail (34) pendant l'assemblage de façon qu'il se loge sur le rail à un endroit choisi quelconque sur la longueur de la circonférence où le connecteur doit être placé pendant l'utilisation, caractérisé en ce que lesdits organes de liaison (32) comprennent une structure de transmission de torsion (76, 78, 80, 82) connectée audit connecteur (66), qui peut transmettre une action de torsion au connecteur (66) autour d'un axe sensiblement radial à l'ensemble de roue sous le couple appliqué à l'ensemble de roue en utilisation, l'espacement desdites structures axialement espacées (68, 70) étant assez petit pour que ladite action de torsion appliquée au connecteur provoque un contact de butée desdites structures axialement espacées avec les côtés opposés du rail afin de transmettre les charges d'entraînement dudit dispositif de couplage de roues pendant l'utilisation, par l'intermédiaire desdits organes de liaison en tension (32).

2. Dispositif de couplage de roues suivant la revendication 1, caractérisé en ce que ladite structure de transmission de torsion (76, 78, 80, 82) comprend un élément de liaison (56, 58, 80) s'étendant sensiblement dans la direction axiale desdites roues en utilisation, et au moins une articulation pivotante (78, 82) reliant ledit élément de liaison audit connecteur (66), l'axe de pivotement de ladite articulation étant sensiblement transversal à la longueur de l'élément de liaison.

3. Dispositif de couplage de roues suivant la revendication 2, caractérisé en ce qu'il est prévu deux articulations pivotantes (78, 82) reliant ledit élément de liaison (56, 58, 80) audit connecteur, les axes de pivot de ces deux articulations étant sensiblement transversaux à la longueur de l'élément de liaison, et lesdites articulations pivotantes faisant partie d'un mécanisme à genouillère à dépassement de centre pour la mise en tension desdits organes de liaison.

4. Dispositif de couplage de roues suivant la revendication 3, caractérisé en ce que ledit mécanisme à genouillère est relié à une partie montante dudit connecteur (66).

5. Dispositif suivant l'une quelconque des revendications précédentes, caractérisé en ce que ledit rail (34) fait saillie axialement par rapport à la surface (38) de la roue (12) à laquelle il est fixé, sur son côté situé à l'opposé de l'autre roue (10), et ledit connecteur (66) comprend une partie en crochet qui se loge autour du côté en saillie du rail, et, de l'autre côté, le connecteur (66) comprend une butée ou un talon (74), tourné radialement vers l'extérieur, qui peut venir en contact avec ladite première roue (12) de façon adjacente au bord respectif du rail.

6. Dispositif suivant l'une quelconque des revendications précédentes, caractérisé en ce que ledit rail (34) est constitué d'une longueur de bande plate, et lesdites structures axialement espacées du connecteur (66) peuvent venir en contact avec les bords espacés (44, 46) de ladite bande.

7. Dispositif suivant l'une quelconque des revendications précédentes, caractérisé en ce que ledit connecteur (66) comprend une partie sensiblement en forme de canal pour recevoir ledit rail (34) et constituant lesdites structures axialement espacées (68, 70).

8. Dispositif suivant l'une quelconque des revendications précédentes, caractérisé en ce que ledit connecteur (66) est sensiblement en forme de G.

9. Procédé de couplage d'une roue principale (10) et d'une roue supplémentaire (12) en relation côte à côte, comprenant l'utilisation d'un dispositif de couplage de roues suivant l'une quelconque des revendications précédentes, caractérisé en ce que ladite structure de transmission de torsion (76, 78, 80, 82) est amené en contact de butée desdites structures axialament espacées contre les côtés opposés du rail, de façon à transmettre les charges d'entraînement dudit dispositif de couplage de roues pendant l'utilisation, par l'intermédiaire desdits organes de liaison en tension.

FIG.1

FIG.2